Europäisches Patentamt

European Patent Office

Office européen des brevets

(11) Veröffentlichungsnummer: **0 304 828**
**A2**

## (12) EUROPÄISCHE PATENTANMELDUNG

(21) Anmeldenummer: **88113549.5**

(51) Int. Cl.4: **E06B 3/96**

(22) Anmeldetag: **20.08.88**

(30) Priorität: **22.08.87 DE 3728025**

(43) Veröffentlichungstag der Anmeldung:
**01.03.89 Patentblatt 89/09**

(84) Benannte Vertragsstaaten:
**AT CH DE FR GB LI SE**

(71) Anmelder: **FIRMA CHR. AHRENS**
**Eichkamp 22**
**D-2300 Kiel 1(DE)**

(72) Erfinder: **Ahrens, Johannes Christoph**
**Seehundweg 9**
**D-2300 Kiel 17(DE)**

(74) Vertreter: **Döring, Rudolf, Dr.-Ing.**
**Patentanwälte Dr.-Ing. R. Döring Dipl.-Phys.**
**Dr. J. Fricke Jasperallee 1a**
**D-3300 Braunschweig(DE)**

(54) **Eckverbindung, insbesondere rechtwinklige Eckverbindung, zweier wenigstens im Verbindungsbereich massiver Rahmenteile.**

(57) Bei der Eckverbindung zweier wenigstens im Verbindungsbereich massiver Rahmenteile (1,2) greift ein an dem einen Rahmenteil abgesetzter leistenförmiger Vorsprung (3) in eine angepaßte Nut (4) des anderen Rahmenteiles ein. Außerhalb dieses Eingriffes stoßen die einander zugekehrten Flächen der Rahmenteile stumpf aneinander. Der leistenförmige Vorsprung (3) und die Nut (4) weisen je eine in Richtung quer zum vorsprung und parallel zum Nutengrund verlaufende Ausnehmung (5;6) auf, die sich in der Eingriffsstellung zu einem Sackloch ergänzen, welches einen querschnittsangepaßten Sperrdübel (7) aufnimmt. In einer Ebene parallel und im Abstand zu dem leistenförmigen Vorsprung (3) sind in den beiden Rahmenteilen korrespondierende Bohrungen (8,9) vorgesehen, in welche ein angepaßter Zapfen (10) eingreift.

Fig 1

EP 0 304 828 A2

## Eckverbindung, insbesondere rechtwinklige Eckverbindung, zweier wenigstens im Verbindungsbereich massiver Rahmenteile

Die Erfindung betrifft eine Eckverbindung, insbesondere rechtwinklige Eckverbindung, zweier wenigstens im Verbindungsbereich massiver Rahmenteile, bei der der eine Rahmenteil mit einem bezogen auf seine Dicke abgesetzten leistenförmigen Vorsprung in eine angepaßte, von der Stirnseite des anderen Rahmenteiles ausgehende Nut nach Art einer Nut-Feder-Anordnung eingreift und die Rahmenteile außerhalb ihres Eingriffes einen stumpfen Stoß bilden.

Bei rechtwinkligen Eckverbindungen, z.B. von Fenster-oder Türrahmen sowie auch von Regalteilen, stoßen in der Regel die Rahmenteile über einen Gehrungsschnitt aneinander und sind im Zuge dieses Gehrungsschnittes über eine Nut-Feder-Anordnung miteinander verbunden. Derartige Rahmenverbindungen erfordern einen erheblichen Aufwand an Spanneinrichtungen beim Verleimen und können kaum im Do-it-yourself-Verfahren hergestellt werden.

Eckverbindungen der einleitend genannten Art lassen sich mit wesentlich weniger Aufwand an Spannwerkzeugen herstellen, da die ineinandergreifenden Rahmenteile lediglich in der Längsrichtung des einen den abgesetzten leistenförmigen Vorsprung bildenden Rahmenteiles nach dem Zusammenfügen gespannt werden müssen.

Bei beiden bekannten Ausführungen der Eckverbindungen ergeben sich stets Probleme der hinreichenden Paßgenauigkeit in dem Sinne, daß die Rahmenteile auch den vorgeschriebenen Winkel, insbesondere rechten Winkel, bilden und auch jeweils ohne geringste Verkantungen in einer Ebene verlaufen. Durch Anwendung entsprechender zusätzlicher Spannwerkzeuge lassen sich diese Probleme beseitigen.

Zur erhöhten Stabilisierung der Eckverbindungen von Fensterrahmen wird in der DE-PS 880 056 vorgeschlagen, Holzdübel in Bohrlöcher einzuleimen, die in den verschiedenen Teilen des Fensterrahmens vorgesehen werden sollen.

Das Einleimen der Holzdübel ist jedoch nur durch Fachleute mit speziellem Werkzeug durchzuführen und erfordert außerdem ein Einspannen wenigstens eines Rahmenteiles.

Der Erfindung liegt die Aufgabe zugrunde, eine Eckverbindung der einleitend genannten Art so auszubilden, daß sie durch entsprechende Vorfertigung der Rahmenteile ohne die Verwendung von Spannwerkzeugen oder anderer maschineller Einrichtungen bei hoher Paßgenauigkeit im Do-it-yourself-Verfahren hergestellt werden können.

Diese Aufgabe wird dadurch gelöst, daß bei einer Eckverbindung der einleitend genannten Art außerdem der leistenförmige Vorsprung und die Nut je eine in Richtung im wesentlichen quer zu dem Vorsprung und im wesentlichen parallel zum Nutengrund verlaufende Ausnehmung aufweisen, die sich in der Eingriffsstellung des Vorsprunges in die Nut zueinem Sackloch ergänzen, welches einen querschnittsangepaßten Sperrdübel aufnimmt und im Abstand parallel zu dem leistenförmigen Vorsprung wenigstens ein in korrespondierende Bohrungen der beiden Rahmenteile eingreifender Zapfen vorgesehen ist.

Durch den Eingriff des leistenförmigen Vorsprunges in die Nut wird die Maßhaltigkeit der Rahmenteile in der Rahmenebene gewährleistet. Durch die weiterhin vorgesehene Verbindung der Rahmenteile mittels des einen oder ggf. auch mehrerer Zapfen durch deren Eingriff in korrespondierende Bohrungen beider Rahmenteile wird die fluchtende Position der Außenkanten der beiden Rahmenteile und ihre genaue Winkelstellung zueinander sichergestellt.

Der in das von dem Vorsprung und der Nut gebildete Sackloch eingebrachte, vorzugsweise eingeschlagene Sperrdübel sichert die Position der ineinandergreifenden Rahmenteile, wobei durch einen geringen quer zu ihrer Längserstreckung vorgesehenen Versatz der das Sackloch bildenden Ausnehmungen in dem leistenförmigen Vorsprung und der Nut beim Einbringen des Sperrdübels entsprechende Spannkräfte auf die beiden Rahmenteile übertragen werden können, so daß der leistenförmige Vorsprung mit Sicherheit unter Druck gegen den Nutengrund angepreßt wird.

Mit dieser neuartigen Form einer Eckverbindung wird erreicht, daß durch mehrfachen Formschluß eine ausreichende Eckfestigkeit und eine gute Paßgenauigkeit ohne maschinelle Einrichtungen beim Zusammenbau gegeben ist. Dadurch entsteht die Möglichkeit, fertigbehandelte und lakkierte Einzelteile zu verbinden, ohne daß eine Nachpaßarbeit erforderlich ist. Damit ist aber auch Heimwerkern ein Zusammenbau möglich.

Unter Umständen kann jetzt sogar ganz auf einen Klebstoff verzichtet werden. Ein Versehen der ineinandergreifenden Teile der Eckverbindung mit einem Kleber oder mit einem Leim ergibt jedoch eine besonders dauerhafte und sowohl mechanisch als auch durch die Verklebung bzw. Verleimung gesicherte dauerhafte Verbindung. Der in das Sackloch einzubringende bzw. einzuschlagende Dübel dient beim Einschlagen gleichzeitig als Spannelement, welches das Sackloch nach außen hin bündig abschließt.

Die Rahmenteile können sowohl aus Holz als auch aus Kunststoff bestehen, ebenso wie der Sperrdübel und die Zapfen aus Holz oder Kunststoff hergestellt sein können, wobei eine Kombination von Holz und Kunststoff ebenfalls denkbar ist.

Die neue Eckverbindung läßt sich maßhaltig mit relativ geringem Aufwand vorfertigen, insbesondere wenn das die Nut für die Aufnahme des leistenförmigen Vorsprunges bildende Rahmenteil mehrschichtig ausgebildet ist und eine Schicht der Nuthöhe, also der Dicke des leistenförmigen Vorsprunges entspricht.

Zweckmäßig ist es, wenn die sich zu einem Sackloch ergänzenden Ausnehmungen in dem leistenförmigen Vorsprung und der Nut als Halbbohrungen bzw. mit halbrundem Querschnitt ausgebildet sind. Bei dieser Ausbildung und der Verwendung eines entsprechend angepaßten, also im Querschnitt runden Sperrdübels lassen sich günstig die Verspannungskräfte auf die beiden Rahmenteile übertragen.

Der vorzugsweise aus Kunststoff bestehende Sperrdübel stellt zugleich eine Angußöffnung für einen Injek tionskleber dar. Dadurch wird es möglich, auch den bisher erforderlichen Preßvorgang beim Verleimen überflüssig zu machen und eine Beschädigung der fertigen Oberfläche der Eckverbindung durch austretenden Klebstoff zu vermeiden.

Ganz besonders einfach und gerade für den Heimwerker sehr angenehm wird es, wenn der Sperrdübel als Leimpatrone aus Metall oder Kunststoff mit einem zusammenpreßbaren Leimraum und durch Druck freilegbare Leimaustrittsöffnungen ausgebildet ist. Bei dieser Ausgestaltung kann die Verbindung der Rahmenteile ohne vorherigen Auftrag einer Leimschicht oder Klebstoffschicht zusammengefügt und für die Verleimung allein durch Einschlagen des als Leimpatrone ausgebildeten Sperrdübels erreicht werden. Der als Leimpatrone ausgebildete Sperrdübel weist zweckmäßigerweise einen vollzylindrischen Endabschnitt und einen sich hieran anschließenden im Querschnitt etwas geringer bemessenen hohlzylindrischen, durch eine flexible Wand mit Sollbruchstellen begrenzenden Mittelabschnitt sowie einen beim Einschlagen zuerst in die Sackbohrung eindringenden Führungs- und Anschlagabschnitt auf.

Der als Leimpatrone ausgebildete Sperrdübel wird dabei in seiner Länge größer bemessen, als es der Tiefe des Sackloches entspricht, so daß beim Eindringen des Endabschnittes in das Sackloch das Volumen des zusammenpreßbaren Leimraumes, d.h. das Volumen des Mittelabschnittes, verringert wird und durch den Druck des Leimes die Sollbruchstellen in der flexiblen Wand aufplatzen und der Leim aus der Leimpatrone austreten sowie in die Fugen der Verbindungsteile unter der Einwirkung des Druckes eindringen kann.

Um den Mittelabschnitt des als Leimpatrone ausgebildeten Sperrdübels hinreichend stabil zu gestalten, ist es zweckmäßig, wenn sich durch den hohlzylindrischen Mittelabschnitt der Leimpatrone eine im Querschnitt kreuz- oder sternförmige, elastisch verformbare Aussteifung erstreckt.

Zweckmäßig ist es, wenn das von den sich ergänzenden Ausnehmungen gebildete Sackloch vor dem Ende des leistenförmigen Vorsprunges endet. Auf diese Weise wird das Sackloch durch eine Stirnwand begrenzt, an welcher der Führungs- und Anschlagabschnitt der Leimpatrone zur Anlage kommt. Bei dieser Ausgestaltung läßt sich eine sehr maßgenaue Tiefe des Sackloches erreichen, die von Bedeutung ist, wenn eine genau dosierte Leimmenge beim Einschlagen des Dübels aus dessen Leimraum austreten soll.

Damit eine günstige Verteilung des austretenden Leimes erreicht wird, empfiehlt es sich, im Zuge der Ausnehmung des leistenförmigen Vorsprunges zur Bildung des Sackloches eine durch den Vorsprung hindurchgehende Bohrung vorzusehen. Durch diese Bohrung kann der Leim dann auch auf die dem Leimdübel abgewandte Seite des Vorsprunges und die von diesem und dem anderen Rahmenteil gebildete Fuge eindringen. Zur günstigen Verteilung des aus der Leimpatrone austretenden Leimes ist es fernerhin zweckmäßig, wenn wenigstens eine der jeweilig einander berührenden Flächen der Rahmenteile einschließlich des leistenförmigen Vorsprunges und der angepaßten Nut zur Bildung von Fließkanälen gerillt ausgebildet ist.

Einer gleichmäßigen Leimverteilung dient auch eine weitere bevorzugte Ausführung, bei der der leistenförmige Vorsprung auf seiner der Ausnehmung gegenüber liegenden Seite eine parallel zu der Ausnehmung verlaufende Rinne aufweist, in welcher die von der Ausnehmung ausgehende Bohrung mündet.

Während durch den Sperrdübel die Verbindung formschlüssig in der Bewegungsachse ihrer Zusammenfügung gesichert ist, sichert der in die korrespondierenden Bohrungen der beiden Rahmenteile eingreifende Zapfen, daß Formschluß in den Richtungen senkrecht zur Bewegungsachse des Zusammenfügens gegeben ist. Dieser Zapfen kann entweder seinerseits als Dübel ausgebildet sein und beim Zusammenfügen der beiden Rahmenteile erst eingesteckt werden, er kann aber auch bei der Vorfertigung der Rahmenteile bereits in einem dieser Teile befestigt sein. Er ist vorzugsweise zylindrisch ausgestaltet, andere Formen sind aber ebenfalls denkbar.

Außerdem ist es möglich, mehrere dieser Zapfen vorzusehen.

Die Zeichnung gibt ein Ausführungsbeispiel der Erfindung wieder.

Es zeigen:

Fig. 1 eine perspektivische Draufsicht auf bereits teilweise ineinandergreifende Rahmenteile der Eckverbindung,

Fig. 2 ein Schnittbild entlang der Schnittebene II-II der Fig. 1 bei bereits zusammengefügten Rahmenteilen und teilweise eingeschobenem als Leimpatrone ausgebildeten Sperrdübel.

In dem Beispiel ist angenommen, daß es sich um eine Eckverbindung aus Rahmenteilen 1 und 2 aus Holz handelt. Der Rahmenteil 1 besteht in dem Beispiel aus einstückigem Vollholz, während der Rahmenteil 2 aus drei Lagen 2a, 2b und 2c nach Art eines Schichtholzes ausgebildet ist.

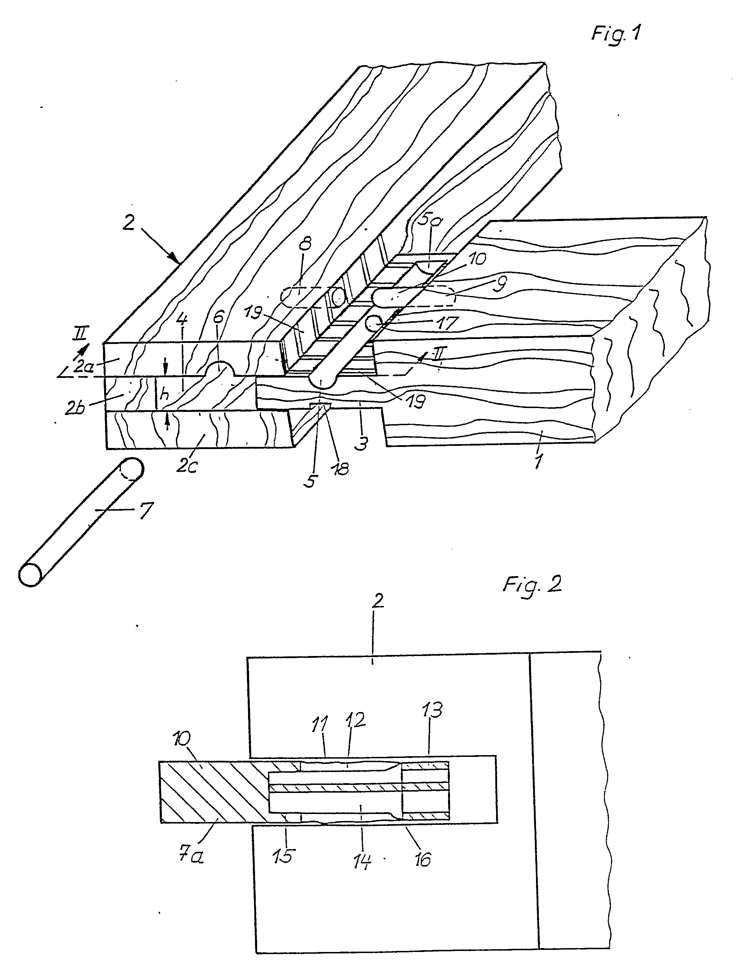

Der Rahmenteil 1 ist mit einem bezogen auf seine Dicke abgesetzten leistenförmigen Vorsprung 3 ausgerüstet, welcher sich in Faserlängsrichtung des Rahmenteiles 1 erstreckt. In dem Rahmenteil 2 ist eine den Abmessungen des leistenförmigen Vorsprunges 2 angepaßte von seiner Stirnseite ausgehende Nut 4 vorgesehen. In der Fig. 1 sind die Rahmenteile in einer Position gezeigt, bei der der leistenförmige Vorsprung 3 bereits teilweise in die Nut 4 des Rahmenteiles 2 eingreift.

Der leistenförmige Vorsprung 3 und die Nut 4 sind in ihren Abmessungen so aufeinander abgestimmt, daß bei vollständigem Eingriff des leistenförmigen Vorsprunges 3 in die Nut 4 die übrigen einander zugekehrten Flächen der Rahmenteile 1 und 2 einen stumpfen Stoß bilden.

Der schichtförmige Aufbau des Rahmenteiles 2 ist so gewählt, daß die Dicke der Schicht 2b der Höhe h der Nut 4 entspricht.

Die Schichten 2a und 2c gehen über die ganze Fläche des Rahmenteiles 2 durch. Sie werden durch die Schicht 2b miteinander verbunden. Diese Schicht nimmt flächenmäßig den nicht von der Nut 4 beanspruchten Platz ein.

Die Schicht 2b bildet zugleich eine Verbindung zwischen den äußeren Schichten 2a und 2c, etwa in Art einer Brücke.

Der leistenförmige Vorsprung 3 und die Nut 4 sind mit je einer sich quer über den leistenförmigen Vor sprung 3 bzw. parallel zum Nutengrund verlaufenden Ausnehmung 5 und 6 versehen, welche sich bei vollständigem Eingriff des leistenförmigen Vorsprunges 3 in die Nut 4 zu einem Sackloch ergänzen, welches in dem dargestellten Beispiel durch die Ausbildung der Ausnehmungen 5 und 6 als Halbbohrungen einen kreisrunden Querschnitt aufweist.

Das in der Eingriffsstellung des leistenförmigen Vorsprunges 3 in die Nut 4 von den Ausnehmungen 5 und 6 gebildete Sackloch dient zur Aufnahme eines einschlagbaren Sperrdübels 7, welcher in seinem Querschnitt dem Sackloch so angepaßt ist, daß er im Reibschluß bzw. klemmend in dem Sackloch Aufnahme findet. Durch eine geringe seitlich gegenüber dem Nutengrund bzw. dem freien Ende des Leistenvorsprunges vorgesehene versetzte Anordnung der Ausnehmungen 5 und 6 kann durch Einschlagen des Sperrdübels 7 auf die zusammenzufügenden Rahmenteile 1 und 2 eine diese Teile an den Stoßstellen dichtend zusammendrückende Anpreßkraft erzeugt werden.

Durch den Sperrdübel 7 wird eine formschlüssige Verbindung zwischen den Rahmenteilen 1 und 2 gewährleistet.

Die durch das Einschlagen des Sperrdübels 7 entstehenden Spaltkräfte werden durch die von der Schicht 2b gebildete Brücke aufgefangen. Dadurch wird eine Spaltung der Schichten 2a, 2b, 2c verhindert, die bei zu großen Spannungen in und zwischen den Schichten auftreten könnte.

In den Rahmenteilen 1 und 2 sind in einer gegenüber dem leistenförmigen Vorsprung 3 bzw. der Nut 4 versetzten parallelen Ebene korrespondierende Bohrungen 8 und 9 vorgesehen, die einen in die beiden Bohrungen eingreifenden Zapfen 10 aufnehmen.

Durch den leistenförmigen Vorsprung 3 und seinen Eingriff in die Nut 4 wird eine Maßhaltigkeit und Ausrichtung der Rahmenteile 1 und 2 in der Rahmenebene gewährleistet, während durch den Zapfen 10 und dessen Eingriff in die Bohrungen 8 und 9 die Randbündigkeit der Rahmenteile 1 und 2 sichergestellt wird.

Die beschriebene Eckverbindung der Rahmenteile 1 und 2 läßt sich ohne Zuhilfenahme irgendwelcher Spannwerkzeuge herstellen. Bei vorherigem Leimauftrag auf die zusammenwirkenden Flächen der Rahmenteile in ihrer Eckverbindung und auch des Sperrdübels 7 läßt sich durch die neue Ausbildungsform eine sichere und dauerhafte sowie sehr maßhaltige Eckverbindung bei entsprechender Vorfertigung der Rahmenteile 1 und 2 sowie des Sperrdübels 7 herstellen.

Der Sperrdübel 7 kann entweder als massives Holzbauteil oder aber auch aus bevorzugt armiertem Kunststoff bestehen. Um sein Einschlagen in das von den Ausnehmungen 5 und 6 gebildete Sackloch zu erleichtern, kann er an seinem vorderen Ende eine Anphasung aufweisen, die in der Zeichnung nicht dargestellt ist.

Um die ohne einen Leimauftrag zusammenzufügenden Rahmenteile 1 und 2 nachträglich zu verleimen, kann statt eines massiven Sperrdübels 7 dieser auch als Leimpatrone aus Metall und/oder Kunststoff mit einem zusammenpreßbaren Leimraum und durch Druck freilegbare Leimaustrittsöffnungen ausgebildet sein.

In der Fig. 2 ist ein Beispiel für einen solchen als Leimpatrone 7a ausgebildeten Sperrdübel in einer Position wiedergegeben, in der er bereits teilweise in das von den Ausnehmungen 5 und 6 gebildete Sackloch eingeschoben ist.

Der als Leimpatrone 7a ausgebildete Sperrdübel weist einen vollzylindrischen Endabschnitt 10, einen sich hieran anschließenden im Querschnitt etwas geringer bemessenen hohlzylindrischen sowie durch eine flexible Wand 11 umschlossenen Hohlraum 12 als Mittelabschnitt sowie einen beim Einschlagen zuerst in die Sackbohrung eindringenden Führungs- und Anschlagabschnitt 13 auf. Zur Aussteifung des von der flexiblen Wand 11 umschlossenen und mit Leim gefüllten Hohlraumes 12 ist in diesem Hohlraum ein Kreuz- oder sternförmiger elastisch verformbarer Aussteifungskörper 14 angeordnet, welcher in dem dargestellten Beispiel der Fig. 2 in eine axiale Ausnehmung 15 des vollzylindrischen Endabschnittes 10 und mit nach außen weisenden schulterförmigen Erweiterungen 16 auf dem Führungs- und Anschlagabschnitt 13 aufliegt sowie in den als ringförmiges Element ausgebildeten Führungs- und Anschlagabschnitt 13 eingreift.

Beim Einschlagen des als Leimpatrone ausgebildeten Sperrdübels, welcher länger ausgebildet ist, als es der Tiefe des Sackloches entspricht, wird mit dem Eintritt des vollzylindrischen Endabschnittes 10 der Hohlraum 12 verkleinert und bei entsprechender dünnwandiger Ausbildung der flexiblen Wand 11 des Mittelabschnittes ein Austritt des Leimvolumens erreicht. Zu diesem Zweck kann die flexible Wandung 11 zusätzlich mit perforationsartigen Sollbruchstellen ausgerüstet sein, die den Leimaustritt erleichtern.

Der austretende Leim gelangt unter der Einwirkung des Einschlagdruckes in die Fugen zwischen den zusammenwirkenden Flächen der Rahmenteile 1 und 2.

Um für den einschlagbaren, als Leimpatrone 7a ausgebildeten Dübel eine definierte Einschlagtiefe zu gewährleisten, ist in dem Beispiel vorgesehen, daß die Ausnehmungen 5 und 6 in dem leistenförmigen Vorsprung 3 bzw. der Nut 4 vor dem Ende des leistenförmigen Vorsprunges enden. Für die Ausnehmung 5 ist die dadurch gebildete Anschlagfläche 5a aus der Fig. 1 ersichtlich.

Weiterhin ist für die gleichmäßige Leimverteilung im Zuge der Ausnehmung 5 des leistenförmigen Vorsprunges 3 eine quer durch den Vorsprung hindurchgehende Bohrung 17 vorgesehen, durch die der austretende Leim auch auf die der Ausnehmung 5 abgekehrte Seite des leistenförmigen Vorsprunges 3 gelangt und sich dort verteilt. Um diese Verteilung zu begünstigen, ist der leistenförmige Vorsprung 3 auf seiner der Ausnehmung 5 gegenüberliegenden Seite mit einer parallel zu der Ausnehmung 5 verlaufende Rinne 18 ausgerüstet.

Weiterhin sind zur gleichmäßigen Verteilung des aus der Leimpatrone austretenden Leimes die in der zusammengefügten Stellung der Rahmenteile 1 und 2 einander berührenden Flächen einschließlich des leistenförmigen Vorsprunges und der angepaßten Nut zur Bildung von Fließkanälen gerillt ausgebildet. Derartige Rillen 19 sind in der Fig 1 an der dem Rahmenteil 1 zugekehrten Seite des Rahmenteiles 2 und auf der Oberseite des leistenförmigen Vorsprunges 3 angedeutet.

Der leistenförmige Vorsprung 3 und die Nut 4 können auch mit je zwei oder mehr paarweise zusammen je ein Sackloch bildenden Ausnehmungen 5 und 6 zur Aufnahme je eines Sperrdübels 7 bzw. je einer Leimpatrone 7a ausgerüstet sein. Wenn auf den gegenüberliegenden Seiten des leistenförmigen Vorsprunges 3 und der Nut 4 eine oder mehrere Ausnehmungen 5 und 6 vorgesehen sind, können die durch den Vorsprung 3 hindurchgehende Bohrung 17 und die Rinne 18 in dem Vorsprung entfallen. Schließlich können zwischen den stumpf aufeinanderstoßenden Flächen der Rahmenteile 1 und 2 noch elastisch verformbare streifenförmige Dicht- und Füllprofile oder dgl. vorgesehen, insbesondere eingeklebt oder eingeleimt werden.

**Ansprüche**

1. Eckverbindung, insbesondere rechtwinklige Eckverbindung, zweier wenigstens im Verbindungsbereich massiver Rahmenteile, bei der

a) der eine Rahmenteil (1) mit einem bezogen auf seine Dicke abgesetzten leistenförmigen Vorsprung (3) in eine angepaßte, von der Stirnseite des anderen Rahmenteiles (2) ausgehende Nut (4) nach Art einer Nut-Feder-Anordnung eingreift,

b) die Rahmenteile (1,2) außerhalb ihres Eingriffes einen stumpfen Stoß bilden,

c) der leistenförmige Vorsprung (3) und die Nut (4) je eine in Richtung im wesentlich quer zu dem Vorsprung (3) und im wesentlichen parallel zum Nutengrund verlaufende Ausnehmung (5,6) aufweisen, die sich in der Eingriffsstellung des Vorsprunges (3) in die Nut (4) zu einem Sackloch ergänzen, welches einen querschnittsangepaßten Sperrdübel (7) aufnimmt,

d) im Abstand parallel zu dem leistenförmigen Vorsprung (3) wenigstens ein in korrespondierende Bohrungen (8,9) der beiden Rahmenteile (1,2) eingreifender Zapfen (10) vorgesehen ist.

2. Eckverbindung nach Anspruch 1, **dadurch gekennzeichnet**, daß die sich zu einem Sackloch ergänzenden Ausnehmungen (5;6) als Halbbohrungen bzw. mit halbrunden Querschnitten ausgebildet sind.

3. Eckverbindung nach Anspruch 1 oder 2, **dadurch gekennzeichnet**, daß das die Nut (4) aufweisende Rahmenteil (2) eine Schicht (2b) aufweist, die an die Nut (4) angrenzt, deren Dicke besitzt und die durch die Nut (4) voneinander getrennten Schichten (2a,2c) des Rahmenteiles (2) miteinander verbindet.

4. Eckverbindung nach einem der vorhergehenden Ansprüche, **dadurch gekennzeichnet**, daß der Sperrdübel als Leimpatrone (7a) aus Metall und/oder Kunststoff mit einem zusammenpreßbaren Leimraum (12) und durch Druck freilegbare Leimaustrittsöffnungen ausgebildet ist.

5. Eckverbindung nach Anspruch 4, **dadurch gekennzeichnet**, daß die Leimpatrone (7a) einen vollzylindrischen Abschnitt (10), einen im Querschnitt geringer bemessenen hohlzylindrischen, durch eine flexible Wand (11) mit Sollbruchstellen begrenzten Mittelabschnitt sowie einen beim Einschlagen zuerst in die Sackbohrung eindringenden Führungs- und Anschlagabschnitt (13) aufweist.

6. Eckverbindung nach Anspruch 5, **dadurch gekennzeichnet**, daß sich durch den hohlzylindrischen Mittelabschnitt der Leimpatrone (7a) ein im Querschnitt kreuz- oder sternförmiger, elastisch verformbarer Aussteifungskörper (14) erstreckt.

7. Eckverbindung nach einem der vorhergehenden Ansprüche, **dadurch gekennzeichnet**, daß das von den sich ergänzenden Ausnehmungen (5;6) gebildete Sackloch vor dem Ende des leistenförmigen Vorsprunges (3) endet.

8. Eckverbindung nach einem der vorhergehenden Ansprüche, **dadurch gekennzeichnet**, daß im Zuge der Ausnehmung (5) des leistenförmigen Vorsprunges (3) zur Bildung des Sackloches eine durch den Vorsprung hindurchgehende Bohrung (17) vorgesehen ist.

9. Eckverbindung nach einem der vorhergehenden Ansprüche, **dadurch gekennzeichnet**, daß wenigstens eine der jeweilig einander berührenden Flächen der Rahmenteile (1,2) einschließlich des leistenförmigen Vorsprunges (3) und der angepaßten Nut (4) zur Bildung von Fließkanälen gerillt ausgebildet ist.

10. Eckverbindung nach einem der vorhergehenden Ansprüche, **dadurch gekennzeichnet**, daß der leistenförmige Vorsprung (3) auf seiner der Ausnehmung (5) gegenüberliegenden Seite eine parallel zu der Ausnehmung verlaufende Rinne (18) aufweist, in welcher die von der Ausnehmung ausgehende Bohrung (17) mündet.

*Fig. 1*

*Fig. 2*